# EUROPEAN PATENT SPECIFICATION

(11) **EP 2 193 676 B1**
(45) Date of publication and mention of the grant of the patent: **26.09.2012**
(21) Application number: 08835206.7
(22) Date of filing: 02.10.2008
(51) Int. Cl.: G08B 13/14, H04M 1/02, H04M 1/66, H04W 12/12, H04W 88/02, H04M 1/725, H04W 12/06

(54) **Mobile phone data security**
Mobiltelefondatensicherheit
Sécurité de données de téléphone mobile

(30) Priority: 04.10.2007 US 867484
(43) Date of publication of application: 09.06.2010
(73) Proprietor: Kyocera Corporation, Kyoto 612-8501 (JP)
(72) Inventor: CHITLUR, Suchithra, Narasimahalu, San Diego, CA 92121-1511 (US)
(74) Representative: Viering, Jentschura & Partner
(86) International application number: PCT/IB2008/002582
(87) International publication number: WO 2009/044255

(56) References cited:
- KR-A- 20070 078 441
- US-A1- 2004 006 655
- US-A1- 2007 026 906

## Description

### FIELD OF THE INVENTION

The present invention generally relates to wireless communication devices and more particularly to sensor enabled wireless communication devices.

### BACKGROUND

In general, cell phones will be stolen and used as criminal currency for a variety of reasons. Some cell phones are stolen simply because they are a part of the current possession of the victim and the thief has no interest or time to sift through the possession to pick out items of interest while others are more specifically targeted. In either case, cell phones are attractive because they are small and fairly valuable items for which ready re-sale markets exist among those without a phone or among those looking to upgrade an old model phone. The growing demand for cell phones in many countries has led to an outgrowth of dubious outlets at which phones can be reprogrammed and possibly sent to a country with high demand. Cell phone companies continue to lose money from the use of airtime by unauthorized users, a phenomenon that has the attention of law enforcement. However, evidence leading to solving this crime is difficult to obtain. Adding to the difficulty of solving this dilemma is the fact that a number of cell phones are easily picked up when they are left casually, for example, on counter tops in bars, on a desk in a classroom and on the side of the road after falling out of a vehicle as the passenger exits the vehicle. In comparison to other personal items of interest to thieves, cell phone users can be easily identified. In fact, some studies have shown that a high percentage of phone robberies involved phones that were being used or on display. Regardless of the reason why cell phone theft is so rampant, the result is a loss of the phone and information as well. Sometimes the information may fall in the wrong hands causing serious security concerns and a threat to the privacy of the owner.

There are already some basic security measures available to protect existing phones. Subscriber Identity Module (SIM) cards (described below) have password or Personal Identification Number (PIN) protection mechanisms built into them to prevent unauthorized use. However, phone users seem reluctant to use PIN numbers although obviously they provide some safeguard against unauthorized use of the SIM. Although, all operators are able to disable the SIM number, disabling the SIM number does not block the handset itself. One strategy for thieves is simply to insert a new SIM card. A SIM card is a removable smart card for cell phones. The SIM card allows users to change phones by simply removing the SIM card from one wireless phone and inserting it into another wireless phone. The SIM card contains subscriber details, security information and memory for a personal directory of numbers. The SIM card also stores data that identifies the caller to the wireless service provider. The use of SIM cards is mandatory in the Global System for Mobile (GSM) world. GSM is a cellular network, which means that cell phones connect to it by searching for cells in the immediate vicinity. GSM networks operate in four different frequency ranges. Most GSM networks operate in the 900 MHz or 1800 MHz bands. The equivalent of a SIM in Universal Mobile Telecommunications System (UMTS) is called the Universal Integrated Circuit Card (UICC), whereas the Removable User Identity Module (RUIM) is more popular in Code Division Multiple Access (CDMA) phones. UMTS is one of the third-generation (3G) mobile phone technologies. To differentiate UMTS from competing network technologies, UMTS is sometimes marketed as 3GSM, emphasizing the combination of the 3G nature of the technology and the GSM standard which it was designed to succeed. CDMA refers to a digital cellular technology that uses spread-spectrum techniques. CDMA does not assign a specific frequency to each user. Instead, every channel uses the full available spectrum.

Another security measure is that cell phone operators can disable the handset if users know their International Mobile Equipment Identity (IMEI) number. The IMEI number is used by the GSM network to identify valid devices and therefore can be used to stop a stolen phone from accessing the network. For example, if a mobile phone is stolen, the owner can call his or her network provider and instruct them to "ban" the phone using its IMEI number. This renders the phone useless, regardless of whether the phone's SIM is changed. A particular problem is that few users seem to know their IMEI number, perhaps not appreciating its significance in dealing with theft. Another problem is that a handset barred on one network can be used on another network (or one abroad) with a valid SIM card for that network. Even operators who can block handsets face the problem that they can be unblocked by changing the IMEI number (sometimes known as 'tumbling' or 're-chipping'). This requires specialized equipment that is not only available commercially for valid users but also at a lower price on the black market.

Methods and device for protecting mobile phones against theft are described in US 2004/006655 A1, US 2007/026906 A1 and KR 2007 0078441 A.

### SUMMARY

A method of locating and safeguarding information on wireless communication devices is described that includes providing a sensing device for the wireless communication device where the sensing device serves as a gateway to unique information of the wireless communication device. The invention provides a method according to claim 1 and provides an apparatus according to claim 10. Further embodiments are described in the dependent claims. The sensing device identifies or senses an attempt to access the unique information of the wireless communication device and requests that the user provide authentication information. Access to the unique information is granted to the user if the authentication is valid; otherwise, a wireless service provider is alerted that an unauthorized user is attempting to access the unique information. In one embodiment the wireless communication device transmits its location information to the wireless service provider. In another embodiment the wireless communication device transmits its identification information to the wireless service provider. In yet another embodiment, access to the unique information is disabled.

Other features and advantages of the present invention will become more readily apparent to those of ordinary skill in the art after reviewing the following detailed description and accompanying drawings.

### BRIEF DESCRIPTION OF THE DRAWINGS

The details of the present invention, both as to its structure and operation, may be gleaned in part by study of the accompanying drawings, in which like reference numerals refer to like parts, and in which:
Figure 1 is a network diagram illustrating a wireless communication device, for example a handset, in a wireless network environment.
Figure 2 illustrates one embodiment of a cell phone with a sensing device.
Figure 3 is a block diagram of example components of a wireless communication device according to an embodiment of the disclosure.
Figure 4 illustrates an example flowchart showing one embodiment of a method for locating a wireless communication device and safeguarding its unique information from unauthorized users.
Figure 5 is a block diagram illustrating an example wireless communication device that may be used in connection with various embodiments described herein; and
Figure 6 is a block diagram illustrating an example computer system that may be used in connection with various embodiments described herein.

### DETAILED DESCRIPTION

The following description sets forth numerous specific details such as examples of specific systems, components, methods, and so forth, in order to provide a good understanding of several embodiments of the present invention. It will be apparent to one skilled in the art, however, that at least some embodiments of the present invention may be practiced without these specific details. In other instances, well-known components or methods are not described in detail or are presented in simple block diagram format in order to avoid unnecessarily obscuring the present disclosure. Thus, the specific details set forth are merely exemplary. Particular implementations may vary from these exemplary details . As such, this detailed description of various alternative embodiments should not be construed to limit the scope or breadth of the present invention as set forth in the appended claims.

Embodiments of a method of locating a wireless communication device and safeguarding its information from unauthorized users are described. In one embodiment, the method includes providing a sensing device for a wireless communication device and identifying or sensing an attempt to access unique information associated with the wireless communication device. In addition, the method includes requesting authentication to have access to the unique information and if authentication fails, subsequently alerting and providing a wireless service provider with identification information of the wireless communication device. One familiar use of authentication is access control.

A computer system, in this case a wireless communication device, intended to be used only by those authorized must attempt to detect and exclude the unauthorized. Access to it is therefore usually controlled by insisting on an authentication procedure to establish with some degree of confidence the identity of the user, then granting those privileges as may be authorized to that user. The unique information of a wireless communication device is generally housed in a removable smart electronic card, for example a SIM card. The SIM card includes unique information such as subscriber details, security information and memory for a personal directory of numbers. The SIM card also stores data that identifies the caller to the wireless service provider. Because the SIM card is accessible by removing a sliding battery package in the back of the wireless communication device, access to the battery can also be protected by this method or apparatus.

Embodiments of an apparatus are also defined. In one embodiment the apparatus includes a sensing device associated with a wireless communication device, a user interface module to receive authentication information from a user attempting to access unique information of the wireless communication device, a locking module to prevent access to the unique information upon authentication failure and a communication section to transmit identification information from the wireless communication device to a wireless service provider.

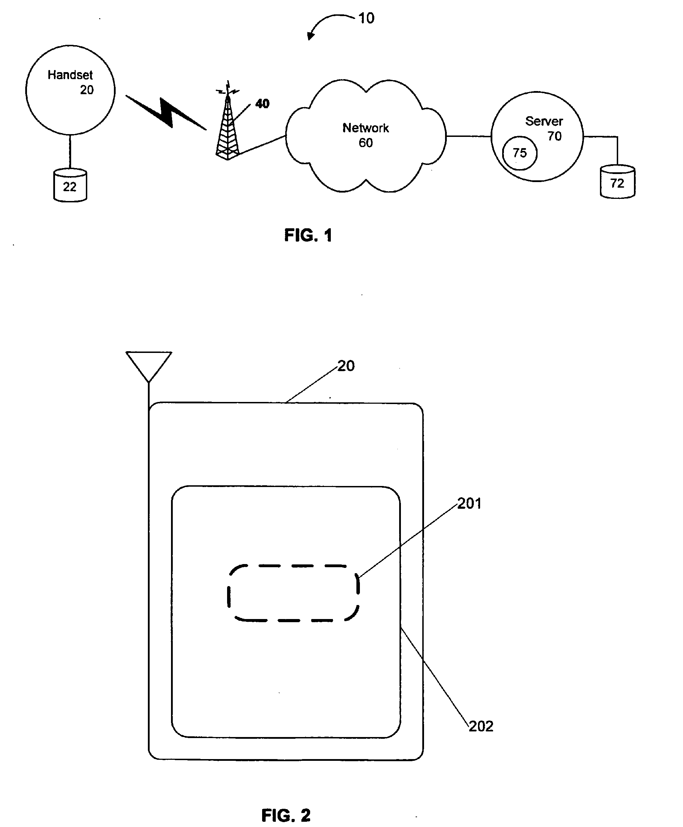

Fig. 1 is a network diagram illustrating a wireless communication device (also referred to herein as handset or cell phone) such as a handset 20 in communication over a network 60. The network 60 may be a CDMA network or any other technology network according to an embodiment of the disclosure. In the illustrated embodiment, the system 10 comprises a handset 20 and a base station 40. The handset 20 is communicatively coupled with one or more networks such as network 60 via one or more base stations such as base station 40. The system 10 may additionally comprise a server 70, for example a location server, which is communicatively coupled with the handset via the network 60. The location server 70 may also have a location module 75 that is configured to track the location of various handsets such as handset 20. The location module 75 may also perform the function of identifying the location of handset 20 using well-known triangulation techniques in combination with information from base stations such as base stations 40. The location module 75 may also use global positioning system ("GPS") information from handset 20 to track the location of handset 20.

The location server 70 and the location module 75 may also receive and route location requests to and from handsets and other devices (not shown) that are capable of communicating with the server 70 via the network 60 or any other network that the server 70 may be connected to. For example, the server 70 may also be connected to the Internet, through network 60 or otherwise, such that devices capable of communicating with the server 70 via the Internet can request the location of handsets from the server 70.

The handset 20 can be any of a variety of wireless communication devices, including a cell phone, personal digital assistant ("PDA"), personal computer ("PC"), laptop computer, PC card, special purpose equipment, or any combination of these and other devices capable of establishing a wireless communication link over a wireless communication network such as the network 60. The handset 20 and server 70 can be configured with a data storage area 22 and 72 respectively that can be any sort of internal or external memory device and may include both persistent and volatile memories. The function of the respective data storage areas 22 and 72 is to maintain data for long-term storage and also to provide efficient and fast access to instructions for applications that are executed by the respective devices.

Figure 2 illustrates one embodiment of a cell phone 20 with a sensing device 201. The sensing device may be assembled into the cell phone during manufacture or installed after manufacture. The sensing device 201 can be a sensor, for example an authentication sensor, or an algorithm incorporated into the wireless phone technology to provide the cell phone with sensing capability. In one embodiment the sensing device 201 is incorporated into a sliding back case 202 of the cell phone 20, where the sliding back case 202 can be the means to access a battery and a SIM card of the cell phone 20.

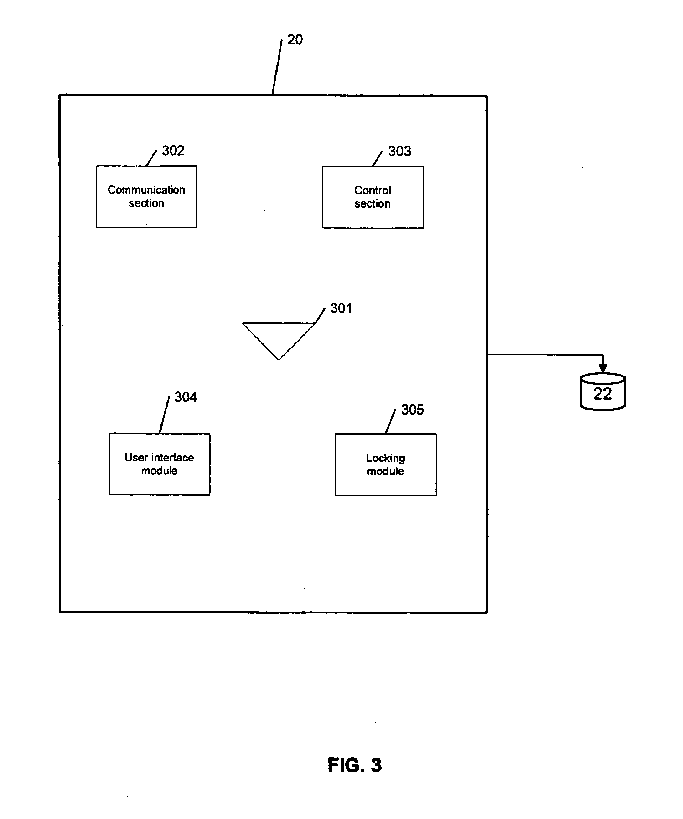

Figure 3 is a block diagram of example components of a wireless communication device 20 according to an embodiment of the disclosure. In general a wireless communication device 20 includes an antenna 301, a communication section 302, a control section 303, a locking module 305 and a user interface module 304 as shown in Figure 3. The sensing device 201 (described in figure 2 above) which can be incorporated into the back of a wireless communication device 20 is configured to detect an attempt to access unique information of the wireless communication device. Upon detection, the user is prompted to enter authentication information on a user interface module 304. The user interface module 304 can be a keyboard that is usually located on the front of the wireless communication device 20 or may be strategically placed anywhere on the wireless communication device 20, for example, on the sliding back case 202 of the wireless communication device 20.

A locking module 305 that is associated with the sensing device 201 (described in figure 2 above) is configured to block access to the unique information of the wireless communication device 20 when authentication fails. The locking module 305 can be an algorithm configured to secure the unique information of the wireless communication device 20 or a hardware device. An intelligent device, for example, the control section 303, processes information in relation to verification of authentication. A communication section 302 transmits information processed by the control section 303 to a wireless service provider. The information communicated to the wireless service provider can include alerting the provider of a failed attempt at authentication, a transmission of identification information or location information of the cell phone 200.

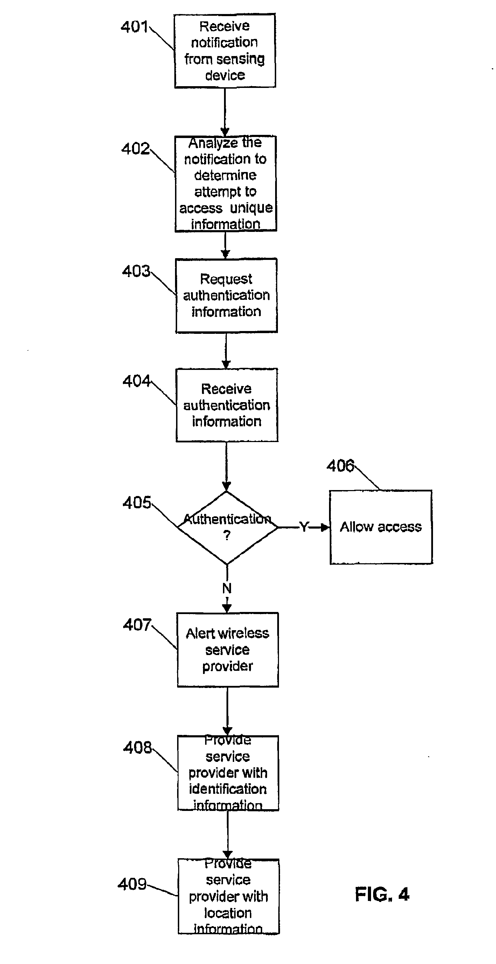

Figure 4 illustrates a flowchart showing one embodiment of a method for locating a wireless communication device and safeguarding its unique information from unauthorized users. The process can be carried by a handset such as previously described with respect to Figures 1, 2, and 3. In step 401 receive a notification from a sensing device, for example, an authentication sensor, on a wireless communication device, for example, a cell phone. The sensing device serves as a gateway to unique information associated with the cell phone. In step 402 analyze the notification to determine an attempt to access the unique information or the battery of the cell phone The attempt can be a physical attempt to access the battery of the cell phone or an attempt to access the unique information of the cell phone via the user interface. In step 403 authentication is requested to access the unique information associated with the cell phone by prompting the user to enter authentication information and in step 404 receive authentication information from the user.

In step 405 a decision is made as to whether the authentication information provided by the user is approved or failed. If the authentication information is approved, in step 406 the user is given access to the unique information associated with the cell phone. Otherwise, in step 407, the wireless service provider is alerted that an unauthorized user is attempting to access the unique information of the cell phone. In step 408, information relating to the identification of the cell phone is transmitted to the wireless service provider. Further, in step 409, the wireless service provider is provided with information relating to the location of the cell phone so that in the event that the cell phone is stolen, the service provider can communicate the whereabouts of the cell phone to the appropriate authorities.

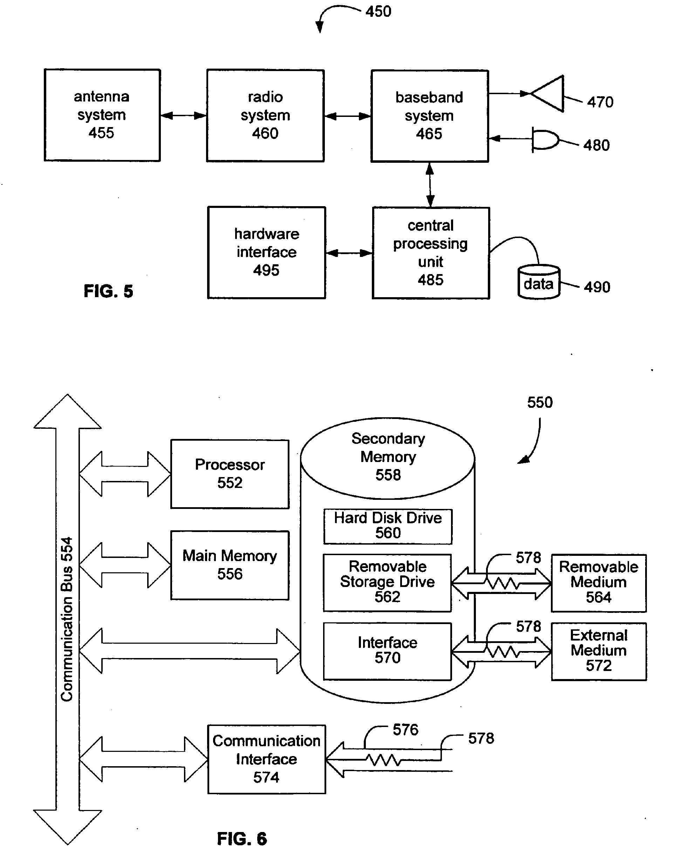

Fig. 5 is a block diagram illustrating an example wireless communication device 450 that may be used in connection with various embodiments described herein. For example, the wireless communication device 450 may be used in conjunction with a handset as described above with respect to Fig. 1. However, other wireless communication devices and/or architectures may also be used, as will be clear to those skilled in the art.

In the illustrated embodiment, wireless communication device 450 comprises an antenna system 455, a radio system 460, a baseband system 465, a speaker 470, a microphone 480, a central processing unit ("CPU") 485, a data storage area 490, and a hardware interface 495. In the wireless communication device 450, radio frequency ("RF") signals are transmitted and received over the air by the antenna system 455 under the management of the radio system 460.

In one embodiment, the antenna system 455 may comprise one or more antennae and one or more multiplexers (not shown) that perform a switching function to provide the antenna system 455 with transmit and receive signal paths. In the receive path, received RF signals can be coupled from a multiplexer to a low noise amplifier (not shown) that amplifies the received RF signal and sends the amplified signal to the radio system 460.

In alternative embodiments, the radio system 460 may comprise one or more radios that are configured to communication over various frequencies. In one embodiment, the radio system 460 may combine a demodulator (not shown) and modulator (not shown) in one integrated circuit ("IC"). The demodulator and modulator can also be separate components. In the incoming path, the demodulator strips away the RF carrier signal leaving a baseband receive audio signal, which is sent from the radio system 460 to the baseband system 465.

If the received signal contains audio information, then baseband system 465 decodes the signal and converts it to an analog signal. Then the signal is amplified and sent to the speaker 470. The baseband system 465 also receives analog audio signals from the microphone 480. These analog audio signals are converted to digital signals and encoded by the baseband system 465. The baseband system 465 also codes the digital signals for transmission and generates a baseband transmit audio signal that is routed to the modulator portion of the radio system 460. The modulator mixes the baseband transmit audio signal with an RF carrier signal generating an RF transmit signal that is routed to the antenna system and may pass through a power amplifier (not shown). The power amplifier amplifies the RF transmit signal and routes it to the antenna system 455 where the signal is switched to the antenna port for transmission.

The baseband system 465 is also communicatively coupled with the central processing unit 485. The central processing unit 485 has access to a data storage area 490. The central processing unit 485 is preferably configured to execute instructions (i.e., computer programs or software) that can be stored in the data storage area 490. Computer programs can also be received from the baseband processor 465 and stored in the data storage area 490 or executed upon receipt. Such computer programs, when executed, enable the wireless communication device 450 to perform the various functions as previously described. For example, data storage area 490 may include various software modules (not shown).

In this description, the term "computer readable medium" is used to refer to any media used to provide executable instructions (e.g., software and computer programs) to the wireless communication device 450 for execution by the central processing unit 485. Examples of these media include the data storage area 490, microphone 480 (via the baseband system 465), antenna system 455 (also via the baseband system 465), and hardware interface 495. These computer readable mediums are means for providing executable code, programming instructions, and software to the wireless communication device 450. The executable code, programming instructions, and software, when executed by the central processing unit 485, preferably cause the central processing unit 485 to perform the inventive features and functions previously described herein.

The central processing unit 485 is also preferably configured to receive notifications from the hardware interface 495 when new devices are detected by the hardware interface. Hardware interface 495 can be a combination electromechanical detector with controlling software that communicates with the CPU 485 and interacts with new devices. The hardware interface 495 may be a firewire port, a USB port, a Bluetooth or infrared wireless unit, or any of a variety of wired or wireless access mechanisms. Examples of hardware that may be linked with the device 450 include data storage devices, computing devices, headphones, microphones, and the like.
Fig. 6 is a block diagram illustrating an example computer system 550 that may be used in connection with various embodiments described herein. For example, the computer system 550 may be used in conjunction with a location server as previously described with respect to Fig. 1. However, other computer systems and/or architectures may be used, as will be clear to those skilled in the art.

The computer system 550 preferably includes one or more processors, such as processor 552. Additional processors may be provided, such as an auxiliary processor to manage input/output, an auxiliary processor to perform floating point mathematical operations, a special-purpose microprocessor having an architecture suitable for fast execution of signal processing algorithms (e.g., digital signal processor), a slave processor subordinate to the main processing system (e.g., back-end processor), an additional microprocessor or controller for dual or multiple processor systems, or a coprocessor. Such auxiliary processors may be discrete processors or may be integrated with the processor 552.

The processor 552 is preferably connected to a communication bus 554. The communication bus 554 may include a data channel for facilitating information transfer between storage and other peripheral components of the computer system 550. The communication bus 554 further may provide a set of signals used for communication with the processor 552, including a data bus, address bus, and control bus (not shown). The communication bus 554 may comprise any standard or non-standard bus architecture such as, for example, bus architectures compliant with industry standard architecture ("ISA"), extended industry standard architecture ("EISA"), Micro Channel Architecture ("MCA"), peripheral component interconnect ("PCI") local bus, or standards promulgated by the Institute of Electrical and Electronics Engineers ("IEEE") including IEEE 488 general-purpose interface bus ("GPIB"), IEEE 696/S-100, and the like.

Computer system 550 preferably includes a main memory 556 and may also include a secondary memory 558. The main memory 556 provides storage of instructions and data for programs executing on the processor 552. The main memory 556 is typically semiconductor-based memory such as dynamic random access memory ("DRAM") and/or static random access memory ("SRAM"). Other semiconductor-based memory types include, for example, synchronous dynamic random access memory ("SDRAM"), Rambus dynamic random access memory ("RDRAM"), ferroelectric random access memory ("FRAM"), and the like, including read only memory ("ROM").

The secondary memory 558 may optionally include a hard disk drive 560 and/or a removable storage drive 562, for example a floppy disk drive, a magnetic tape drive, a compact disc ("CD") drive, a digital versatile disc ("DVD") drive, etc. The removable storage drive 562 reads from and/or writes to a removable storage medium 564 in a well-known manner. Removable storage medium 564 may be, for example, a floppy disk, magnetic tape, CD, DVD, etc.

The removable storage medium 564 is preferably a computer readable medium having stored thereon computer executable code (i.e., software) and/or data. The computer software or data stored on the removable storage medium 564 is read into the computer system 550 as electrical communication signals 578.

In alternative embodiments, secondary memory 558 may include other similar means for allowing computer programs or other data or instructions to be loaded into the computer system 550. Such means may include, for example, an external storage medium 572 and an interface 570. Examples of external storage medium 572 may include an external hard disk drive or an external optical drive, or and external magnetooptical drive.

Other examples of secondary memory 558 may include semiconductor-based memory such as programmable read-only memory ("PROM"), erasable programmable read-only memory ("EPROM"), electrically erasable read-only memory ("EEPROM"), or flash memory (block oriented memory similar to EEPROM). Also included are any other removable storage units 572 and interfaces 570, which allow software and data to be transferred from the removable storage unit 572 to the computer system 550.

Computer system 550 may also include a communication interface 574. The communication interface 574 allows software and data to be transferred between computer system 550 and external devices (e.g. printers), networks, or information sources. For example, computer software or executable code may be transferred to computer system 550 from a network server via communication interface 574. Examples of communication interface 574 include a modem, a network interface card ("NIC"), a communications port, a PCMCIA slot and card, an infrared interface, and an IEEE 1394 fire-wire, just to name a few.

Communication interface 574 preferably implements industry promulgated protocol standards, such as Ethernet IEEE 802 standards, Fiber Channel, digital subscriber line ("DSL"), asynchronous digital subscriber line ("ADSL"), frame relay, asynchronous transfer mode ("ATM"), integrated digital services network ("ISDN"), personal communications services ("PCS"), transmission control protocol/Internet protocol ("TCP/IP"), serial line Internet protocol/point to point protocol ("SLIP/PPP"), and so on, but may also implement customized or non-standard interface protocols as well.

Software and data transferred via communication interface 574 are generally in the form of electrical communication signals 578. These signals 578 are preferably provided to communication interface 574 via a communication channel 576. Communication channel 576 carries signals 578 and can be implemented using a variety of wired or wireless communication means including wire or cable, fiber optics, conventional phone line, cellular phone link, wireless data communication link, radio frequency (RF) link, or infrared link, just to name a few.

Computer executable code (i.e., computer programs or software) is stored in the main memory 556 and/or the secondary memory 558. Computer programs can also be received via communication interface 574 and stored in the main memory 556 and/or the secondary memory 558. Such computer programs, when executed, enable the computer system 550 to perform the various functions as previously described.

In this description, the term "computer readable medium" is used to refer to any media used to provide computer executable code (e.g., software and computer programs) to the computer system 550. Examples of these media include main memory 556, secondary memory 558 (including hard disk drive 560, removable storage medium 564, and external storage medium 572), and any peripheral device communicatively coupled with communication interface 574 (including a network information server or other network device). These computer readable mediums are means for providing executable code, programming instructions, and software to the computer system 550.

In an embodiment that is implemented using software, the software may be stored on a computer readable medium and loaded into computer system 550 by way of removable storage drive 562, interface 570, or communication interface 574. In such an embodiment, the software is loaded into the computer system 550 in the form of electrical communication signals 578. The software, when executed by the processor 552, preferably causes the processor 552 to perform the inventive features and functions previously described herein.

Various embodiments may also be implemented primarily in hardware using, for example, components such as application specific integrated circuits ("ASICs"), or field programmable gate arrays ("FPGAs"). Implementation of a hardware state machine capable of performing the functions described herein will also be apparent to those skilled in the relevant art. Various embodiments may also be implemented using a combination of both hardware and software.

Furthermore, those of skill in the art will appreciate that the various illustrative logical blocks, modules, circuits, and method steps described in connection with the above described figures and the embodiments disclosed herein can often be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a module, block, circuit or step is for ease of description. Specific functions or steps can be moved from one module, block or circuit to another without departing from the invention.

Moreover, the various illustrative logical blocks, modules, and methods described in connection with the embodiments disclosed herein can be implemented or performed with a general purpose processor, a digital signal processor ("DSP"), an ASIC, FPGA or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

Additionally, the steps of a method or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium including a network storage medium. An exemplary storage medium can be coupled to the processor such the processor can read information from, and write information to, the storage medium. In the alternative, the storage medium can be integral to the processor. The processor and the storage medium can also reside in an ASIC.

The above description of the disclosed embodiments is provided to enable any person skilled in the art to make or use the invention. Various modifications to these embodiments will be readily apparent to those skilled in the art, and the generic principles described herein can be applied to other embodiments without departing from the scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly limited by nothing other than the appended claims.

## Claims

1. A method of locating and safeguarding information of wireless communication devices comprising:
receiving (401) a notification from a sensing device (201) incorporated into a case (202) on a wireless communication device (20), wherein the sensing device senses a physical attempt to access a battery that serves as a gateway to unique information associated with the wireless communication device (20) and that is accessable through the case (202) of the wireless communication device (20);
analyzing (402) the notification to determine the physical attempt to access the battery;
requesting (403) a user of the wireless communication device to enter authentication information if the physical attempt to access the battery is determined;
receiving (404) authentication information from the user; and
subsequently alerting (407) an interested party and providing the interested party with identification information associated with the wireless communication device if the physical attempt to access the battery and the unique information associated with the wireless communication device is not authenticated, otherwise providing access (406) to the unique information if the physical attempt is authenticated.

2. The method of claim 1, further comprising disabling access to the unique information associated with the wireless communication device (20) upon failure of authentication.

3. The method of claim 2, further comprising setting a flag to activate the disabling of access to the unique information.

4. The method of claim 3, further comprising periodically sending information of a location and a serial number of the wireless communication device (20) to the interested party until the flag is reset.

5. The method of claim 1, further comprising activating an alarm when the physical attempt is made to access the battery.

6. The method of claim 1, further comprising storing the unique information associated with the wireless communication device (20) in a module associated with the wireless communication device.

7. The method of claim 1, further comprising providing the wireless service provider with location information of the wireless communication device (20).

8. The method of claim 1, further comprising alerting the interested party by sending a predefined message from the wireless communication device (20).

9. The method of claim 1, further comprising activating an internal battery associated with the wireless communication device in the event of a loss of power to the wireless communication device (20) to allow transmission of identification information.

10. An apparatus for securing a wireless communication device comprising:
a sensing device (201) incorporated into a case (202) of the wireless communication device (20), wherein the sensing device (201) has means to detect a physical attempt to remove a battery to access unique information of the wireless communication device (20) that is accessable through the case (202) of the wireless communication device (20);
a user interface module (304) to prompt a user of the wireless communication device for authentication information in response to the sensing device (201) detecting the physical attempt to remove the battery, wherein access is granted to the unique information of the wireless communication device upon authentication;
a locking module (305) associated with the sensing device (201), wherein the locking module is configured to prevent access to unique information of the wireless communication device upon a failed attempt at authentication; and
a communication section (302) associated with the wireless communication device to transmit identification information from the wireless communication device (20) to an interested party upon unsuccessful authentication.

11. The apparatus of claim 10, wherein the interested party is a wireless service provider.

12. The apparatus of claim 10, wherein the unique information associated with the wireless communication device is housed in a Subscriber Identity Module "SIM".

13. The apparatus of claim 10, wherein the unique information associated with the wireless communication device is housed in a Universal Integrated Circuit Card "UICC".

14. The apparatus of claim 10, wherein the unique information associated with the wireless communication device is housed in a Removable User Identity Module "RUIM".

15. The apparatus of claim 10, wherein the unique information associated with the wireless communication device comprises a serial number.

16. The apparatus of claim 15, wherein the serial number is from the group consisting of an International Mobile Equipment Identity "IMEI", an Electronic Serial Number "ESN", and a Mobile Equipment Identifier "MEID".

17. The apparatus of claim 10, wherein the unique information of the wireless communication device comprises the serial number and the location information of the cell phone.

18. The apparatus of claim 10, wherein the authentication information is used to access a wireless communication device battery.

## Patentansprüche

1. Ein Verfahren zum Orten und Sichern von Informationen drahtloser Kommunikationsvorrichtungen, aufweisend:
Empfangen (401) einer Benachrichtigung von einer Sensorvorrichtung (201), die in ein Gehäuse (202) an einer drahtlosen Kommunikationsvorrichtung (20) integriert ist, wobei ein physikalischer Versuch eines Zugriffs auf eine Batterie, die durch das Gehäuse (202) der drahtlosen Kommunikationsvorrichtung (20) hindurch zugänglich ist, von der Sensorvorrichtung erfasst wird, die als Zugang zu einer einzigartigen Information dient, die mit der drahtlosen Kommunikationsvorrichtung (20) verknüpft ist,
Analysieren (402) der Benachrichtigung, um den physikalischen Versuch, auf die Batterie zuzugreifen, zu ermitteln,
Auffordern (403) eines Benutzers der drahtlosen Kommunikationsvorrichtung, Authentifizierungsinformationen einzugeben, wenn der physikalische Versuch, auf die Batterie zuzugreifen, ermittelt wird,
Empfangen (404) von Authentifizierungsinformationen von dem Benutzer, und
anschließendes Warnen (407) eines interessierten Beteiligten und Bereitstellen von Identifizierungsinformationen, die mit der drahtlosen Kommunikationsvorrichtung verknüpft sind, an den interessierten Beteiligten, wenn der physikalische Versuch, auf die Batterie und die mit der drahtlosen Kommunikationsvorrichtung verknüpfte einzigartige Information zuzugreifen, nicht authentifiziert wird, wobei andernfalls Zugriff (406) auf die einzigartige Information gewährt wird, wenn der physikalische Versuch authentifiziert wird.

2. Das Verfahren gemäß Anspruch 1, ferner bei einem Ausbleiben der Authentifizierung das Sperren des Zugriffs auf die mit der drahtlosen Kommunikationsvorrichtung (20) verknüpfte einzigartige Information aufweisend.

3. Das Verfahren gemäß Anspruch 2, ferner das Setzen einer Markierung aufweisend, um das Sperren des Zugriffs auf die einzigartigen Informationen zu aktivieren.

4. Das Verfahren gemäß Anspruch 3, ferner das periodische Senden von Informationen bezüglich einer Position und einer Seriennummer der drahtlosen Kommunikationsvorrichtung (20) an den interessierten Beteiligten aufweisend, bis die Markierung gelöscht ist.

5. Das Verfahren gemäß Anspruch 1, ferner das Aktivieren eines Alarms aufweisend, wenn der physikalische Versuch erfolgt, auf die Batterie zuzugreifen.

6. Das Verfahren gemäß Anspruch 1, ferner das Speichern der mit der drahtlosen Kommunikationsvorrichtung (20) verknüpften einzigartigen Information in einem mit der drahtlosen Kommunikationsvorrichtung verknüpften Modul aufweisend.

7. Das Verfahren gemäß Anspruch 1, ferner das Bereitstellen von Positionsinformationen der drahtlosen Kommunikationsvorrichtung (20) an den Drahtlosdienstanbieter aufweisend.

8. Das Verfahren gemäß Anspruch 1, ferner das Warnen des interessierten Beteiligten durch Senden einer vordefinierten Nachricht von der drahtlosen Kommunikationsvorrichtung (20) aufweisend.

9. Das Verfahren gemäß Anspruch 1, ferner in dem Fall eines Verlustes von Leistung an die drahtlose Kommunikationsvorrichtung (20) das Aktivieren einer internen Batterie aufweisend, die mit der drahtlosen Kommunikationsvorrichtung verknüpft ist, um das Übermitteln einer Identifizierungsinformation zu ermöglichen.

10. Eine Vorrichtung zum Sichern einer drahtlosen Kommunikationsvorrichtung, aufweisend:
eine Sensorvorrichtung (201), die in ein Gehäuse (202) der drahtlosen Kommunikationsvorrichtung (20) integriert ist, wobei die Sensorvorrichtung (201) Mittel aufweist, um einen physikalischen Versuch des Entfernens einer Batterie zu detektieren, um auf eine einzigartige Information der drahtlosen Kommunikationsvorrichtung (20) zuzugreifen, die durch das Gehäuse (202) der drahtlosen Kommunikationsvorrichtung (20) hindurch zugänglich ist,
ein Benutzerschnittstellenmodul (304), um einen Benutzer der drahtlosen Kommunikationsvorrichtung bezüglich Authentifizierungsinformationen aufzufordern, in Antwort darauf, dass die Sensorvorrichtung (201) den physikalischen Versuch detektiert, die Batterie zu entfernen, wobei beim Authentifizieren Zugriff auf die einzigartige Information der drahtlosen Kommunikationsvorrichtung gewährt wird,
ein Verriegelungsmodul (305), das mit der Sensorvorrichtung (201) verknüpft ist, wobei das Verriegelungsmodul eingerichtet ist, um bei einem erfolglosen Versuch bei der Authentifizierung Zugriff auf die einzigartige Information der drahtlosen Kommunikationsvorrichtung zu verhindern, und
einen Kommunikationsabschnitt (302), der mit der drahtlosen Kommunikationsvorrichtung verknüpft ist, um bei einer erfolglosen Authentifizierung Identifikationsinformationen von der drahtlosen Kommunikationsvorrichtung (20) an einen interessierten Beteiligten zu übermitteln.

11. Die Vorrichtung gemäß Anspruch 10, wobei der interessierte Beteiligte ein Drahtlosdienstanbieter ist.

12. Die Vorrichtung gemäß Anspruch 10, wobei die mit der drahtlosen Kommunikationsvorrichtung verknüpfte einzigartige Information in einem Teilnehmer-Identitätsmodul "STM" aufgenommen ist.

13. Die Vorrichtung gemäß Anspruch 10, wobei die mit der drahtlosen Kommunikationsvorrichtung verknüpfte einzigartige Information in einer Universelle-Integrierter-Schaltkreis-Karte "UICC" aufgenommen ist.

14. Die Vorrichtung gemäß Anspruch 10, wobei die mit der drahtlosen Kommunikationsvorrichtung verknüpfte einzigartige Information in einem Herausnehmbares-Benutzer-Identitätsmodul "RUIM" aufgenommen ist.

15. Die Vorrichtung gemäß Anspruch 10, wobei die mit der drahtlosen Kommunikationsvorrichtung verknüpfte einzigartige Information eine Seriennummer aufweist.

16. Die Vorrichtung gemäß Anspruch 15, wobei die Seriennummer aus der Gruppe bestehend aus einer Internationale-Mobile-Einrichtung-Identität "IMEI", einer elektronischen Seriennummer "ESN" und einem Mobile-Einrichtung-Identifizierer "MEID" ist.

17. Die Vorrichtung gemäß Anspruch 10, wobei die einzigartige Information der drahtlosen Kommunikationsvorrichtung die Seriennummer und die Positionsinformation des Mobiltelefons aufweist.

18. Die Vorrichtung gemäß Anspruch 10, wobei die Authentifizierungsinformation verwendet wird, um auf eine Druhtlose-Kommunikationsvorrichtung-Batterie zuzugreifen.

## Revendications

1. Procédé destiné à localiser et à protéger les informations de dispositifs de communication sans fil comprenant les étapes consistant à :
recevoir (401) une notification en provenance d'un dispositif de détection (201) incorporé dans un boîtier (202) sur un dispositif de communication sans fil (20), dans lequel le dispositif de détection détecte une tentative d'accès physique à une batterie qui sert de passerelle à des informations uniques associées au dispositif de communication sans fil (20) et auxquelles il est possible d'accéder par l'intermédiaire du boîtier (202) du dispositif de communication sans fil (20) ;
analyser (402) la notification afin de déterminer la tentative d'accès physique à la batterie ;
demander (403) à un utilisateur du dispositif de communication sans fil d'entrer des informations d'authentification si la tentative d'accès physique à la batterie est déterminée ;
recevoir (404) des informations d'authentification en provenance de l'utilisateur ; et
alerter (407) par la suite un correspondant intéressé et fournir au correspondant intéressé des informations d'identification associées au dispositif de communication sans fil si la tentative d'accès physique à la batterie et aux informations uniques associées au dispositif de communication sans fil n'est pas authentifiée, sinon fournir un accès (406) aux informations uniques si la tentative d'accès physique est authentifiée.

2. Procédé selon la revendication 1, comprenant en outre une étape consistant à invalider l'accès aux informations uniques associées au dispositif de communication sans fil (20) lors d'un échec de l'authentification.

3. Procédé selon la revendication 2, comprenant en outre une étape consistant à positionner un drapeau pour activer l'invalidation de l'accès aux informations uniques.

4. Procédé selon la revendication 3, comprenant en outre une étape consistant à envoyer de manière périodique les informations concernant l'emplacement et un numéro de série du dispositif de communication sans fil (20) au correspondant intéressé, jusqu'à ce que le drapeau soit réinitialisé.

5. Procédé selon la revendication 1, comprenant en outre une étape consistant à activer une alarme lorsque la tentative d'accès physique vise à accéder à la batterie.

6. Procédé selon la revendication 1, comprenant en outre une étape consistant à stocker les informations uniques associées au dispositif de communication sans fil (20) dans un module associé au dispositif de communication sans fil.

7. Procédé selon la revendication 1, comprenant en outre une étape consistant à fournir au fournisseur de service sans fil des informations concernant l'emplacement du dispositif de communication sans fil (20).

8. Procédé selon la revendication 1, comprenant en outre une étape consistant à alerter le correspondant intéressé en envoyant un message prédéfini à partir du dispositif de communication sans fil (20).

9. Procédé selon la revendication 1, comprenant en outre une étape consistant à activer une batterie interne associée au dispositif de communication sans fil dans le cas d'une perte de puissance vers le dispositif de communication sans fil (20) afin de permette la transmission des informations d'identification.

10. Appareil destiné à sécuriser un dispositif de communication sans fil comprenant :
un dispositif de détection (201) incorporé dans un boîtier (202) du dispositif de communication sans fil (20), lequel dispositif de détection (201) présente des moyens pour détecter une tentative physique de retrait d'une batterie afin d'accéder à des informations uniques du dispositif de communication sans fil (20) auxquelles il est possible d'accéder par l'intermédiaire du boîtier (202) du dispositif de communication sans fil (20) ;
un module d'interface utilisateur (304) pour inviter un utilisateur du dispositif de communication sans fil à fournir des informations d'authentification en réponse au dispositif de détection (201) qui détecte la tentative physique de retrait de la batterie, dans lequel l'accès est accordé aux informations uniques du dispositif de communication sans fil lors d'une authentification ;
un module de verrouillage (305) associé au dispositif de détection (201), lequel module de verrouillage est configuré pour empêcher l'accès aux informations uniques du dispositif de communication sans fil lors d'une tentative infructueuse au moment d'une authentification ; et
une section communication (302) associée au dispositif de communication sans fil pour émettre des informations d'identification à partir du dispositif de communication sans fil (20) vers un correspondant intéressé lors d'une authentification infructueuse.

11. Appareil selon la revendication 10, dans lequel le correspondant intéressé est un fournisseur de service sans fil.

12. Appareil selon la revendication 10, dans lequel les informations uniques associées au dispositif de communication sans fil sont logées dans un module d'identification d'abonné « SIM ».

13. Appareil selon la revendication 10, dans lequel les informations uniques associées au dispositif de communication sans fil sont logées dans une carte universelle à circuit intégré « UICC ».

14. Appareil selon la revendication 10, dans lequel les informations uniques associées au dispositif de communication sans fil sont logées dans un module d'identité d'utilisateur amovible « RUIM ».

15. Appareil selon la revendication 10, dans lequel les informations uniques associées au dispositif de communication sans fil comprennent un numéro de série.

16. Appareil selon la revendication 15, dans lequel le numéro de série est issu du groupe composé d'une identité internationale d'équipement mobile « IMEI », d'un numéro de série électronique « ESN», et d'un identifiant d'équipement mobile « MEID ».

17. Appareil selon la revendication 10, dans lequel les informations uniques du dispositif de communication sans fil comprennent le numéro de série et les informations concernant l'emplacement du téléphone mobile.

18. Appareil selon la revendication 10, dans lequel les informations d'authentification sont utilisées pour accéder à une batterie du dispositif de communication sans fil.
